# EUROPEAN PATENT APPLICATION

(11) **EP 4 850 790 A1**
(43) Date of publication of application: **09.12.2026**
(21) Application number: 26182187.0
(22) Date of filing: 01.06.2026
(51) Int. Cl.: B01D 53/88

(54) **GAS DECOMPOSITION MODULE**

(30) Priority: 05.06.2025 JP 2025094235
(71) Applicant: Sharp Kabushiki Kaisha, Sakai City, Osaka 590-8522 (JP)
(72) Inventor: IWASE, Kazuya, Osaka, 590-8522 (JP); TSUTSUMINO, Tomoya, Osaka, 590-8522 (JP); ATSUMI, Tatsufumi, Osaka, 590-8522 (JP); MITAMURA, Keigo, Osaka, 590-8522 (JP)
(74) Representative: Müller Hoffmann & Partner

(57) **Abstract**

A gas decomposition module of the present disclosure includes a housing having at least one inlet port and at least one exhaust port, a photocatalyst, a light source provided to irradiate the photocatalyst with light, an adsorbent, a fan provided to blow air from the at least one inlet port toward the at least one exhaust port, a first opening-and-closing mechanism provided to open and close the at least one exhaust port, and a circulation flow path. The photocatalyst and the adsorbent are disposed in a flow path from the inlet port toward the exhaust port. The circulation flow path is provided in such a manner that, when the fan blows air with the at least one exhaust port closed by the first opening-and-closing mechanism, air that has passed through the photocatalyst and the adsorbent flows through the circulation flow path and again passes through the photocatalyst and the adsorbent.

## Description

### BACKGROUND

The present disclosure relates to a gas decomposition module.

An air purifier having a photocatalyst layer and an activated carbon filter is known (see, for example, Japanese Unexamined Patent Application Publication No. 2001-087358). In such an air purifier, odorous substances in the air can be efficiently removed by both the photocatalytic activity generated upon irradiation of the photocatalyst layer and the adsorption performance of the activated carbon filter.

### SUMMARY

However, in a conventional air purifier having a photocatalyst layer and an activated carbon filter, when the amount of adsorption on the surface of the activated carbon increases (e.g., when the activated carbon is saturated), the adsorption performance of the activated carbon filter deteriorates, and the activated carbon filter no longer adsorbs odorous substances. Therefore, the activated carbon filter needs to be replaced. In addition, when the adsorption performance of the activated carbon filter deteriorates, organic substances in the air are decomposed by the photocatalytic activity, and intermediate products thus generated may be discharged from the exhaust port together with the air as odorous substances (e.g., acetic acid, formic acid, and the like).
The present disclosure has been made in view of such circumstances, and provides a gas decomposition module having excellent air purification performance over a long period of time without replacing an adsorbent.

The present disclosure provides a gas decomposition module including a housing having at least one inlet port and at least one exhaust port, a photocatalyst, a light source provided to irradiate the photocatalyst with light, an adsorbent, a fan provided to blow air from the at least one inlet port toward the at least one exhaust port, a first opening-and-closing mechanism provided to open and close the at least one exhaust port, and a circulation flow path. The photocatalyst and the adsorbent are disposed in a flow path extending from the at least one inlet port toward the at least one exhaust port. The circulation flow path is provided in such a manner that, when the fan blows air with the at least one exhaust port closed by the first opening-and-closing mechanism, air that has passed through the photocatalyst and the adsorbent flows through the circulation flow path and again passes through the photocatalyst and the adsorbent.

In the gas decomposition module according to the present disclosure, odorous substances can be desorbed from the adsorbent into air while air is circulated, and the desorbed odorous substances can be removed by photocatalytic activity, whereby adsorption performance of the adsorbent can be restored. Therefore, the gas decomposition module according to the present disclosure can have excellent air purification performance for a long period of time without replacing the adsorbent.

### BRIEF DESCRIPTION OF THE DRAWINGS

FIG. 1 is a schematic cross-sectional view illustrating a gas decomposition module according to an embodiment of the present disclosure.
FIG. 2 is a schematic cross-sectional view illustrating a gas decomposition module according to an embodiment of the present disclosure.
FIG. 3 is a schematic cross-sectional view illustrating a gas decomposition module according to an embodiment of the present disclosure.

### DETAILED DESCRIPTION

A gas decomposition module of the present disclosure includes a housing having at least one inlet port and at least one exhaust port, a photocatalyst, a light source provided to irradiate the photocatalyst with light, an adsorbent, a fan provided to blow air from the at least one inlet port toward the at least one exhaust port, a first opening-and-closing mechanism provided to open and close the at least one exhaust port, and a circulation flow path. The photocatalyst and the adsorbent are disposed in a flow path extending from the at least one inlet port toward the at least one exhaust port. The circulation flow path is provided in such a manner that, when the fan blows air with the at least one exhaust port closed by the first opening-and-closing mechanism, air that has passed through the photocatalyst and the adsorbent flows through the circulation flow path and again passes through the photocatalyst and the adsorbent.

Preferably, the gas decomposition module according to the present disclosure includes one or more controllers, and the one or more controllers are provided to turn on the light source when the fan blows air with the exhaust port closed.

Preferably, the gas decomposition module according to the present disclosure includes one or more controllers, and the one or more controllers are provided to turn off the light source when the fan blows air with the exhaust port open.

It is preferable that the gas decomposition module according to the present disclosure further include a second opening-and-closing mechanism provided to open and close the inlet port.

Preferably, the gas decomposition module according to the present disclosure includes a gas sensor provided to detect odorous substances in air that has passed through the photocatalyst and the adsorbent with the at least one exhaust port open, and one or more controllers, and the one or more controllers are provided to close the at least one exhaust port by using the first opening-and-closing mechanism and cause the fan to blow air when a concentration of the odorous substances detected by the gas sensor becomes higher than a predetermined value. Preferably, the gas decomposition module according to the present disclosure includes a gas sensor provided to detect odorous substances in air that has passed through the photocatalyst and the adsorbent with the at least one exhaust port open, and one or more controllers, and the one or more controllers are provided to turn off the light source when a concentration of the odorous substances detected by the gas sensor becomes higher than a predetermined value. Preferably, the gas decomposition module according to the present disclosure includes a gas sensor provided to detect odorous substances in air that has passed through the photocatalyst and the adsorbent with the at least one exhaust port closed, and one or more controllers, and the one or more controllers are provided to open the at least one exhaust port by using the first opening-and-closing mechanism and cause the fan to blow air when a concentration of the odorous substances detected by the gas sensor becomes lower than a predetermined value.

Preferably, the gas decomposition module according to the present disclosure includes one or more controllers, and the one or more controllers are provided to close the exhaust port by using the first opening-and-closing mechanism and cause the fan to blow air when a time for blowing air drawn in from the inlet port toward the exhaust port using the fan exceeds a predetermined time.

Preferably, the adsorbent is included in an adsorbent layer, the photocatalyst is included in a photocatalyst layer, and the adsorbent layer, the photocatalyst layer, and the fan are arranged, in a flow path extending from the inlet port toward the exhaust port, in the order of the adsorbent layer, the photocatalyst layer, and the fan.

Hereinafter, an embodiment of the present disclosure will be described with reference to drawings. The configurations illustrated in the drawings or the description below are illustrative, and the scope of the present disclosure is not limited to the drawings or the description below.

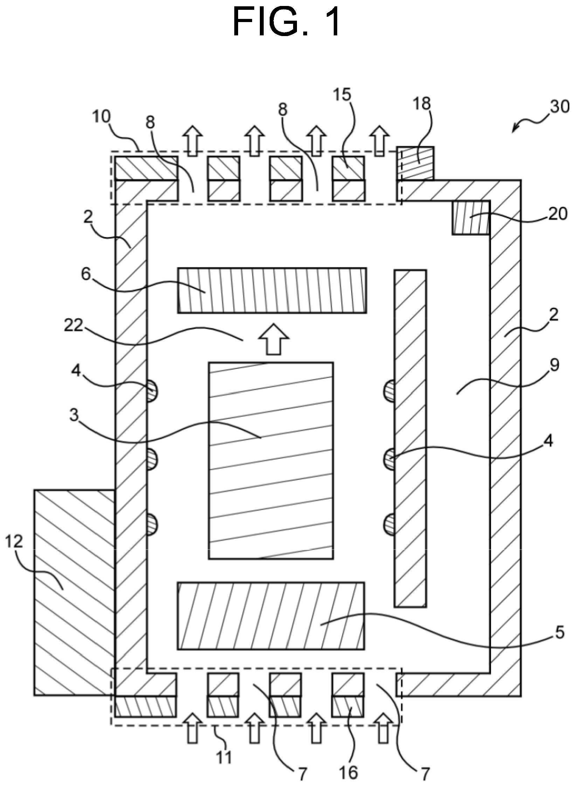

FIGs. 1 to 3 are each a schematic cross-sectional view illustrating a gas decomposition module according to the present embodiment.

A gas decomposition module 30 of the present embodiment includes a housing 2 having at least one inlet port 7 and at least one exhaust port 8, a photocatalyst, a light source 4 provided to irradiate the photocatalyst with light, an adsorbent, a fan 6 provided to blow air from the at least one inlet port 7 toward the at least one exhaust port 8, a first opening-and-closing mechanism 10 provided to open and close the at least one exhaust port 8, and a circulation flow path 9. The photocatalyst and the adsorbent are disposed in a main flow path 22 extending from the at least one inlet port 7 toward the at least one exhaust port 8. The circulation flow path 9 is provided in such a manner that, when the fan 6 blows air with the at least one exhaust port 8 closed by the first opening-and-closing mechanism 10, air that has passed through the photocatalyst and the adsorbent flows through the circulation flow path 9 and again passes through the photocatalyst and the adsorbent.

The gas decomposition module 30 can include at least one of one or more controllers 12, a second opening-and-closing mechanism 11, a photocatalyst layer 3 having the photocatalyst, an adsorbent layer 5 having the adsorbent, a first gas sensor 18, and a second gas sensor 20.

The gas decomposition module 30 is a module that adsorbs and decomposes organic gases such as odorous substances in the air. The gas decomposition module 30 may be an air purification device or a photocatalyst device.

The one or more controllers 12 control the gas decomposition module 30. The one or more controllers 12 may include, for example, a processor (e.g., a CPU), a storage unit (e.g., a memory or a storage), and the like. The one or more controllers 12 can be connected to the first opening-and-closing mechanism 10, the second opening-and-closing mechanism 11, a fan 6, a light source 4, the first gas sensor 18, the second gas sensor 20, and the like via electric wires, and can control these components. In addition, the one or more controllers 12 may include an electronic circuit to control these.

The housing 2 is a container that houses the fan 6, a photocatalyst, an adsorbent, and the like, and serves as a flow path wall of the main flow path 22, the circulation flow path 9, and the like. The housing 2 may be formed of one member or may be formed of a plurality of members. The housing 2 may be made of plastic or metal. The housing 2 has at least one inlet port 7 and at least one exhaust port 8. The inlet port 7 is an opening to allow the air outside the housing 2 to flow into the housing 2, and the exhaust port 8 is an opening to discharge the air inside the housing 2 to the outside of the housing 2.

The main flow path 22 is a flow path through which air flows from the inlet port 7 toward the exhaust port 8 when air is sent to the fan 6 in a state where the inlet port 7 and the exhaust port 8 are opened. The fan 6, the photocatalyst and the adsorbent are disposed in the main flow path 22. For example, in the gas decomposition module 30 illustrated in FIG. 1, when the inlet port 7 and the exhaust port 8 are opened and air is blown by the fan 6, external air flows into the housing 2 from the inlet port 7, flows through the main flow path 22 in which the adsorbent and the photocatalyst are disposed, and is discharged from the exhaust port 8. By causing air to flow in this manner, odorous substances in the air can be continuously removed by the adsorbent and the photocatalyst.

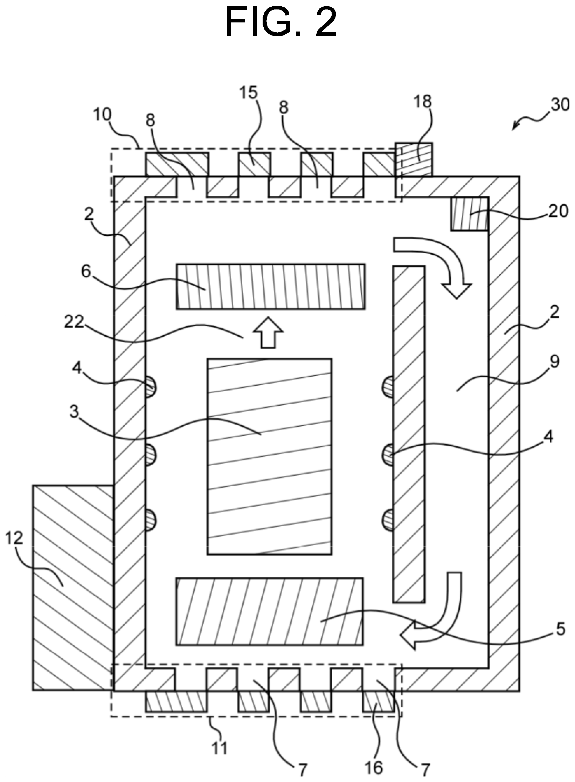

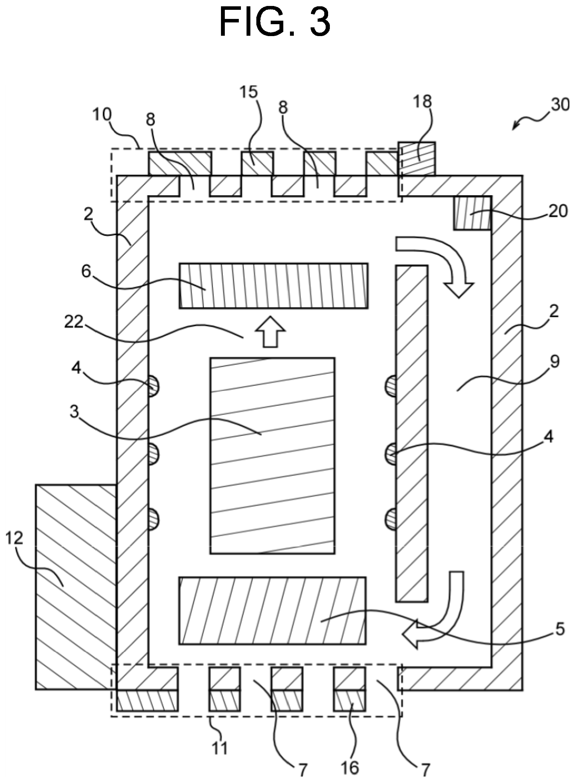

The circulation flow path 9 is a flow path provided in such a manner that when the fan 6 blows air with the exhaust port 8 closed, the air that has passed through the photocatalyst and the adsorbent flows through the circulation flow path 9 and again passes through the photocatalyst and the adsorbent. The circulation flow path 9 may be a flow path that branches from the main flow path 22 near the exhaust port 8 and is connected to the main flow path 22 near the inlet port 7. Further, the circulation flow path 9 may be branched from the main flow path 22 on the downstream side of the fan 6, the photocatalyst, and the adsorbent. For example, in the gas decomposition module 30 illustrated in FIG. 1, when the inlet port 7 and the exhaust port 8 are opened and air is blown by the fan 6, external air flows into the housing 2 from the inlet port 7, flows through the main flow path 22 in which the adsorbent and the photocatalyst are disposed, and is discharged from the exhaust port 8. Further, for example, in the gas decomposition module 30 illustrated in FIGs. 2 and 3, when the exhaust port 8 is closed and air is blown by the fan 6, the air in the main flow path 22 in which the adsorbent and the photocatalyst are disposed flows into the circulation flow path 9 from the branch near the exhaust port 8 and returns to the main flow path 22 near the inlet port 7. Therefore, the air flows so as to circulate through the main flow path 22 and the circulation flow path 9.

The fan 6 is, for example, a propeller fan, a sirocco fan, a turbo fan, a mixed flow fan, or a line flow fan. The one or more controllers 12 can control start and stop of the fan 6, increase and decrease of an air flow rate, and the like.

The adsorbent is a material to adsorb odorous substances in the air, and is an adsorbent utilizing physical adsorption. The adsorbent is, for example, an inorganic adsorbent such as activated carbon or zeolite, or an organic adsorbent. The adsorbent may be disposed in the main flow path 22 in a state of being mixed with the photocatalyst (e.g., a mixed layer of the photocatalyst and the adsorbent), or may be disposed in the main flow path 22 as the adsorbent layer 5 containing the adsorbent. The adsorbent layer 5 may be laminated with the photocatalyst layer 3 containing a photocatalyst. The adsorbent layer 5 may include a carrier (e.g., a filter, paper, a porous body, or the like) and an adsorbent carried by the carrier. Further, the adsorbent contained in the adsorbent layer 5 may be housed in an air-permeable bag or an air-permeable case. The passage of the air through the adsorbent means that the air flows in such a manner that components (e.g., odorous substances) contained in the air come into contact with the adsorbent.

The photocatalyst is, for example, tungsten oxide or titanium oxide. In addition, the photocatalyst may also have co-catalyst particles on its surface, such as platinum group metal particles (e.g., particles of Pt, Pd, Rh, Ru, Os, and Ir). When the photocatalyst receives the light emitted from the light source 4, photocatalytic activity can be generated, and organic substances such as odorous substances can be decomposed.

The photocatalyst may be disposed in the main flow path 22 in a state of being mixed with the adsorbent (e.g., a mixed layer of the photocatalyst and the adsorbent), or may be disposed in the main flow path 22 as the photocatalyst layer 3 containing the photocatalyst. The photocatalyst layer 3 may be laminated with the adsorbent layer 5 containing the adsorbent. The photocatalyst layer 3 may include a carrier (e.g., a filter, paper, a porous body, or the like) and a photocatalyst carried by the carrier. In this case, the photocatalyst layer 3 may have a sheet shape or a pleated sheet shape. Further, the photocatalyst layer 3 may include a substrate and a photocatalyst layer provided on the substrate.

Furthermore, the photocatalyst and the adsorbent may be disposed in the main flow path 22 while being supported on the same carrier.

In addition, the passage of the air through the photocatalyst means that the air flows in such a manner that components (e.g., odorous substances) contained in the air come into contact with the photocatalyst.

The adsorbent layer 5, the photocatalyst layer 3, and the fan 6 can be arranged in any order in the flow path extending from the inlet port 7 toward the exhaust port 8, but for example, as illustrated in FIGs. 1 to 3, the adsorbent layer 5, the photocatalyst layer 3, and the fan 6 may be arranged in this order.

The light source 4 is provided so as to irradiate the photocatalyst disposed in the main flow path 22 with light. The light source 4 may be disposed on the wall surface of the main flow path 22, or may be provided so as to irradiate the photocatalyst with light from the outside of the main flow path 22 via a translucent member. The light source 4 is, for example, a light emitting diode (LED) lamp, a fluorescent lamp, or an incandescent lamp. The one or more controllers 12 can control turning on and off of the light source 4, an increase in the amount of light emission, a decrease in the amount of light emission, and the like.

The light source 4 may include a plurality of LED lamps. When the photocatalyst layer 3 has a sheet shape or a pleated sheet shape, the plurality of LED lamps can be disposed so as to irradiate both the front surface and the back surface of the photocatalyst layer 3 with light.

The first opening-and-closing mechanism 10 is provided so as to be able to open and close the exhaust port 8, and provided so as to be able to switch between a state where the exhaust port 8 is closed and a state where the exhaust port 8 is opened. For example, in the gas decomposition module 30 illustrated in FIG. 1, the exhaust port 8 is opened, and in the gas decomposition module 30 illustrated in FIGs. 2 and 3, the exhaust port 8 is closed. The state where the exhaust port 8 is closed is a state where the air inside the housing 2 is not discharged to the outside of the housing 2 via the exhaust port 8, and is a state where a first lid 15 covers the exhaust port 8. The state where the exhaust port 8 is opened is a state where the air inside the housing 2 is discharged to the outside of the housing 2 via the exhaust port 8, and is a state where the first lid 15 does not cover the exhaust port 8. The first opening-and-closing mechanism 10 is provided so as to be able to move the first lid 15 in this way. Further, the first opening-and-closing mechanism 10 is provided so as to be controlled by the one or more controllers 12, and the first opening-and-closing mechanism 10 automatically switches between a state where the exhaust port 8 is closed and a state where the exhaust port 8 is opened on the basis of a signal of the one or more controllers 12.

The first opening-and-closing mechanism 10 is not particularly limited as long as the exhaust port 8 can be switched between an open state and a closed state. For example, the first opening-and-closing mechanism 10 is an automatic opening-and-closing lid, an electric shutter, or the like.

The second opening-and-closing mechanism 11 is provided so as to be able to open and close the inlet port 7, and provided so as to be able to switch between a state where the inlet port 7 is closed and a state where the inlet port 7 is opened. For example, in the gas decomposition module 30 illustrated in FIGs. 1 and 3, the inlet port 7 is opened, and in the gas decomposition module 30 illustrated in FIG. 2, the inlet port 7 is closed. The state where the inlet port 7 is closed is a state where the air outside the housing 2 does not flow into the inside of the housing 2 via the inlet port 7, and is a state where a second lid 16 covers the inlet port 7. The state where the inlet port 7 is open is a state where the air outside the housing 2 flows into the inside of the housing 2 via the inlet port 7, and is a state where the second lid 16 does not cover the inlet port 7. The second opening-and-closing mechanism 11 is provided so as to be able to move the second lid 16 in this way. Further, the second opening-and-closing mechanism 11 is provided so as to be controlled by the one or more controllers 12, and the second opening-and-closing mechanism 11 automatically switches between a state where the inlet port 7 is closed and a state where the inlet port 7 is opened on the basis of a signal of the one or more controllers 12. The second opening-and-closing mechanism 11 is not particularly limited as long as the inlet port 7 can be switched between an open state and a closed state. For example, the second opening-and-closing mechanism 11 is an automatic opening-and-closing lid, an electric shutter, or the like.

The first gas sensor 18 or the second gas sensor 20 is a gas sensor provided so as to be able to detect components (e.g., odorous substances) in the air, and is, for example, a non-dispersive infrared (NDIR) gas sensor, a semiconductor gas sensor, or the like.

The first gas sensor 18 is disposed so as to detect odorous substances in the air that has passed through the photocatalyst and the adsorbent in the main flow path 22 when the fan 6 blows air with the exhaust port 8 open. For example, as in the gas decomposition module 30 illustrated in FIGs. 1, 2, and 3, the first gas sensor 18 can be disposed near the outlet of the exhaust port 8. The second gas sensor 20 is disposed so as to detect odorous substances in the air that has passed through the photocatalyst and the adsorbent in the main flow path 22 when the fan 6 blows air with the exhaust port 8 closed. For example, as in the gas decomposition module 30 illustrated in FIGs. 1, 2, and 3, the second gas sensor 20 can be disposed in the circulation flow path 9.

The first gas sensor 18 or the second gas sensor 20 is controlled by the one or more controllers 12, and the one or more controllers 12 can acquire the concentration of components (e.g., odorous substances) detected by the first gas sensor 18 or the second gas sensor 20 or a signal corresponding to the concentration.

Next, an operation example of the gas decomposition module 30 will be described.

As in the gas decomposition module 30 illustrated in FIG. 1, the one or more controllers 12 opens the inlet port 7 and the exhaust port 8, turns on the light source 4, and starts operation of the fan 6. As a result, the air outside the housing 2 flows into the housing 2 through the inlet port 7, passes through the adsorbent layer 5 and the photocatalyst layer 3, and is discharged to the outside of the housing 2 through the exhaust port 8 (hereinafter, such a state is referred to as an air purification mode). In the air purification mode, odorous substances and the like in the passing air are adsorbed on the surface of the adsorbent in the adsorbent layer 5. Therefore, the concentration of the odorous substances in the air after passing through the adsorbent layer 5 is reduced. The air after passing through the adsorbent layer 5 further passes through the photocatalyst layer 3. In the photocatalyst layer 3, the odorous substances in the air are decomposed by photocatalytic activity generated upon irradiation of the photocatalyst. Therefore, the concentration of odorous substances in the air after passing through the photocatalyst layer 3 is further reduced. Then, the air after passing through the adsorbent layer 5 and the photocatalyst layer 3 is discharged from the exhaust port 8 to the outside of the housing 2.

In the air purification mode, the light source 4 may be turned off. The light source 4 may be turned off whenever the gas decomposition module 30 is in the air purification mode. Further, when the gas decomposition module 30 is in the air purification mode, there may be a time period during which the light source 4 is turned on and a time period during which the light source 4 is turned off. When the light source 4 is turned off in the air purification mode, the odorous substances contained in the air flowing into the housing 2 from the inlet port 7 are adsorbed and removed by the adsorbent contained in the adsorbent layer 5, and the air after passing through the adsorbent layer 5 is discharged from the exhaust port 8. Because organic matter in the air is not decomposed by photocatalytic activity in the photocatalyst layer 3, it is possible to suppress intermediate products, generated by decomposition of the organic matter by photocatalytic activity and serving as odorous substances (e.g., acetic acid and formic acid), from being discharged from the exhaust port 8 together with the air.

For example, the one or more controllers 12 can turn off the light source 4 when the concentration of the intermediate products detected by the first gas sensor 18 exceeds a predetermined value, and can turn on the light source 4 when the concentration of the intermediate products falls below the predetermined value.

In such an air purification mode, odorous substances in the space where the gas decomposition module 30 is installed can be continuously removed. However, when the air purification mode is continued for a long time, the adsorption amount on the surface of the adsorbent contained in the adsorbent layer 5 increases, and the adsorption performance of the adsorbent deteriorates. When the adsorption performance of the adsorbent deteriorates, the odorous substances in the air can hardly be removed even when the air is passed through the adsorbent layer 5. In this case, the amount of odorous substances contained in the air flowing into the photocatalyst layer 3 increases. In addition, the odorous substances desorbed from the adsorbent may flow into the photocatalyst layer 3.

Even when the amount of the odorous substances contained in the air flowing into the photocatalyst layer 3 is increased, the odorous substances in the air can be decomposed and removed by the photocatalytic activity in the photocatalyst layer 3. However, when the amount of odorous substances is large, intermediate products such as acetic acid and formic acid may be generated when the odorous substances are decomposed in the photocatalyst layer 3. These intermediate products may also be odorous substances, and when the intermediate products are discharged from the exhaust port 8 to the outside of the housing 2, the air purification performance of the gas decomposition module 30 deteriorates.

In this operation example, when the adsorption amount on the surface of the adsorbent contained in the adsorbent layer 5 increases (e.g., when a predetermined time has elapsed from the start of the operation in the air purification mode, or when an increase in the concentration of odorous substances in the gas discharged from the exhaust port 8 is detected using the first gas sensor 18), the one or more controllers 12 close the exhaust port 8 using the first opening-and-closing mechanism 10. At this time, the inlet port 7 may be closed using the second opening-and-closing mechanism 11 as in the gas decomposition module 30 illustrated in FIG. 2, or the inlet port 7 may be opened as in the gas decomposition module 30 illustrated in FIG. 3. Further, even after the exhaust port 8 is closed, the fan 6 continues to blow air and the light source 4 remains turned on. When the exhaust port 8 is closed, the air blown by the fan 6 flows into the circulation flow path 9, returns to the vicinity of the inlet port 7 of the main flow path 22, and again passes through the adsorbent layer 5 and the photocatalyst layer 3. In this way, the air blown by the fan 6 circulates through the main flow path 22 and the circulation flow path 9 (hereinafter, such a state is referred to as a circulation mode).

In the circulation mode, when the circulating air passes through the adsorbent layer 5, the odorous substances adsorbed on the surface of the adsorbent contained in the adsorbent layer 5 desorb into air. When the air after passing through the adsorbent layer 5 passes through the photocatalyst layer 3, the desorbed odorous substances are decomposed by the photocatalytic activity. The air after passing through the photocatalyst layer 3 flows through the circulation flow path 9 and passes through the adsorbent layer 5 again. In this circulation mode, since the air after passing through the photocatalyst layer 3 flows into the adsorbent layer 5, the concentration of the odorous substances in the air flowing into the adsorbent layer 5 is low. Therefore, in the circulation mode, the odorous substances adsorbed on the adsorbent are likely to desorb into air. In this way, by repeatedly passing the air through the adsorbent layer 5 and the photocatalyst layer 3 while circulating the air, desorption and decomposition of the odorous substances adsorbed on the adsorbent are repeated, and the amount of odorous substances adsorbed on the adsorbent gradually decreases. Therefore, the adsorption performance of the adsorbent is gradually recovered in the circulation mode.

In the circulation mode, as illustrated in FIG. 2, by closing the inlet port 7, it is possible to suppress the air circulating through the main flow path 22 and the circulation flow path 9 from flowing out to the outside, and it is possible to suppress the odorous substances desorbed from the adsorbent layer 5 from flowing out to the outside. In addition, in the circulation mode, it is possible to suppress odorous substances from flowing into the housing 2 from the outside, and it is possible to efficiently recover the adsorption performance of the adsorbent.

Further, in the circulation mode, by opening the inlet port 7 as illustrated in FIG. 3, it is possible to suppress a decrease in the oxygen concentration of the air circulating through the main flow path 22 and the circulation flow path 9, and it is possible to suppress a decrease in the photocatalytic activity of the photocatalyst layer 3. Therefore, the odorous substances desorbed from the adsorbent can be efficiently decomposed.

Further, in the circulation mode, the one or more controllers 12 may measure the oxygen gas concentration in the circulating air using the second gas sensor 20, keep the inlet port 7 closed when the measured value is higher than a predetermined value, and keep the inlet port 7 open when the measured value is lower than the predetermined value.

When the adsorption performance of the adsorbent is sufficiently recovered in the circulation mode, the one or more controllers 12 keep the exhaust port 8 and the inlet port 7 open, and switches the mode of the gas decomposition module 30 from the circulation mode to the air purification mode. The timing of switching from the circulation mode to the air purification mode is, for example, when a predetermined time has elapsed since the start of the operation in the circulation mode, when the concentration of the odorous substances detected by the second gas sensor 20 falls below a predetermined concentration, or the like.

Since the adsorption performance of the adsorbent recovers in the circulation mode, odorous substances contained in air drawn in from the inlet port 7 can be removed by both the adsorbent and the photocatalyst when the mode is switched to the air purification mode, and purified air can be discharged from the exhaust port 8, whereby air around the gas decomposition module 30 can be efficiently purified.

When the adsorption performance of the adsorbent deteriorates as the air purification mode continues, the mode of the gas decomposition module 30 is switched again to the circulation mode. In this way, by alternately repeating the air purification mode and the circulation mode, the gas decomposition module 30 can have excellent air purification performance over a long period of time without replacing the adsorbent.

## Claims

1. A gas decomposition module (30) comprising:
a housing (2) having at least one inlet port (7) and at least one exhaust port (8);
a photocatalyst;
a light source (4) provided to irradiate the photocatalyst with light;
an adsorbent;
a fan (6) provided to blow air from the at least one inlet port (7) toward the at least one exhaust port (8);
a first opening-and-closing mechanism (10) provided to open and close the at least one exhaust port (8); and
a circulation flow path (9),
wherein the photocatalyst and the adsorbent are disposed in a flow path (22) extending from the at least one inlet port (7) toward the at least one exhaust port (8), and
wherein the circulation flow path (9) is provided in such a manner that, when the fan (6) blows air with the at least one exhaust port (8) closed by the first opening-and-closing mechanism (10), air that has passed through the photocatalyst and the adsorbent flows through the circulation flow path (9) and again passes through the photocatalyst and the adsorbent.

2. The gas decomposition module (30) according to claim 1, further comprising one or more controllers (12), wherein the one or more controllers (12) are provided to turn on the light source (4) when the fan (6) blows air with the at least one exhaust port (8) closed.

3. The gas decomposition module (30) according to claim 1, further comprising one or more controllers (12), wherein the one or more controllers (12) are provided to turn off the light source (4) when the fan (6) blows air with the at least one exhaust port (8) open.

4. The gas decomposition module (30) according to claim 1, further comprising a second opening-and-closing mechanism (11) provided to open and close the inlet port (7).

5. The gas decomposition module (30) according to claim 1, further comprising:
a gas sensor (18) provided to detect odorous substances in air that has passed through the photocatalyst and the adsorbent with the at least one exhaust port (8) open; and
one or more controllers (12),
wherein the one or more controllers (12) are provided to close the at least one exhaust port (8) by using the first opening-and-closing mechanism (10) and cause the fan (6) to blow air when a concentration of the odorous substances detected by the gas sensor (18) becomes higher than a predetermined value.

6. The gas decomposition module (30) according to claim 1, further comprising:
a gas sensor (18) provided to detect odorous substances in air that has passed through the photocatalyst and the adsorbent with the at least one exhaust port (8) open; and
one or more controllers (12),
wherein the one or more controllers (12) are provided to turn off the light source (4) when a concentration of the odorous substances detected by the gas sensor (18) becomes higher than a predetermined value.

7. The gas decomposition module (30) according to claim 1, further comprising:
a gas sensor (20) provided to detect odorous substances in air that has passed through the photocatalyst and the adsorbent with the at least one exhaust port (8) closed; and
one or more controllers (12),
wherein the one or more controllers (12) are provided to open the at least one exhaust port (8) by using the first opening-and-closing mechanism (10) and cause the fan (6) to blow air when a concentration of the odorous substances detected by the gas sensor (20) becomes lower than a predetermined value.

8. The gas decomposition module (30) according to claim 1, further comprising one or more controllers (12), wherein the one or more controllers (12) are provided to close the exhaust port (8) by using the first opening-and-closing mechanism (10) and cause the fan (6) to blow air when a time for blowing air drawn in from the inlet port (7) toward the exhaust port (8) using the fan (6) exceeds a predetermined time.

9. The gas decomposition module (30) according to claim 1, wherein the adsorbent is included in an adsorbent layer, the photocatalyst is included in a photocatalyst layer, and the adsorbent layer, the photocatalyst layer, and the fan (6) are arranged, in a flow path (22) extending from the at least one inlet port (7) toward the at least one exhaust port (8), in the order of the adsorbent layer, the photocatalyst layer, and the fan (6).
